# EUROPÄISCHE PATENTSCHRIFT

(11) **EP 1 762 459 B1**
(45) Veröffentlichungstag und Bekanntmachung des Hinweises auf die Patenterteilung: **02.04.2014**
(21) Anmeldenummer: 06017107.1
(22) Anmeldetag: 17.08.2006
(51) Int. Cl.: B62B 7/14, B62B 9/20, B62B 7/06, B62B 7/08

(54) **Fahrgestell für einen Kinder- oder Puppenwagen sowie Kinder- oder Puppenwagen**
Chassis for a pram or a doll's pram as well as a pram or a doll's pram
Châssis pour une poussette ou une voiture de poupée ainsi qu'une poussette ou une voiture de poupée

(30) Priorität: 13.09.2005 DE 202005014398 U
(43) Veröffentlichungstag der Anmeldung: 14.03.2007
(73) Patentinhaber: Hartan Kinderwagenwerk e.K., 96242 Sonnefeld-Gestungshausen (DE)
(72) Erfinder: Hartan, Rolf, 96242 Sonnefeld (DE); Wittig, Reinhard, 96523 Steinach (DE)
(74) Vertreter: Blaumeier, Jörg

(56) Entgegenhaltungen:
- EP-A- 1 647 463
- WO-A-99/62753
- WO-A-2005/108181
- US-A- 1 401 085

## Beschreibung

Die Erfindung betrifft ein Fahrgestell für einen Kinder- oder Puppenwagen mit einem Schiebebügel und einer Vorderachs- sowie einer Hinterachsverstrebung.

Fahrgestelle für Kinder- oder Puppenwagen bestehen aus einem Schiebebügel sowie den Vorder- und Hinterrädern, die über entsprechende Verstrebungen in Quer- und Längsrichtung mit dem Schiebebügel und gegebenenfalls einer Halterung für eine Tragetasche oder dergleichen zur Aufnahme des Kindes verbunden sind. Dadurch, dass die Vorder- und Hinterräder in einem gewissen Abstand zueinander auf dem Boden entlanglaufen müssen, während andererseits der Schiebebügel hoch genug angeordnet sein muss, so dass ein bequemes Schieben möglich wird, entsteht eine recht sperrige Konstruktion, die bei Nichtnutzung im Allgemeinen nur schwer zu transportieren ist. Insbesondere entstehen Probleme mit der Unterbringung dann, wenn ein Kinderwagen in einem Pkw mitgeführt oder in einem kleineren Abstellraum bzw. Abstellbereich untergestellt werden soll.

Zwar gibt es bereits Fahrgestelle, die bis zu einem gewissen Grand demontiert werden können, um ein Zusammenlegen zu ermöglichen, jedoch ist das Zusammenlegen hierbei in der Regel mit zeitaufwändigen bzw. komplizierten Schritten wie dem Lösen von Schrauben oder dergleichen verbunden. Zudem ist meist die entstehende Endform immer noch recht sperrig, so dass beispielsweise ein Pkw-Transport immer noch Probleme bereitet. Außerdem entsteht bei einer herkömmlichen Demontage oft das Problem, dass Einzelteile beim Demontieren abgenommen werden, die dementsprechend separat aufbewahrt werden müssen, so dass unter Umständen für einen Zusammenbau erst einmal Teile zusammengesucht werden müssen, die verlegt bzw. an unterschiedlichen Orten aufbewahrt wurden.

Ein Fahrgestell für einen Kinder- oder Puppenwagen gemäss dem Oberbegriff des Anspruchs 1 ist in WO 99/62753 offenbart.

Der Erfindung liegt damit die Aufgabe zugrunde, ein diesbezüglich verbessertes Fahrgestell und einen zugehörigen Kinder- oder Puppenwagen anzugeben.

Zur Lösung dieser Aufgabe sind bei einem Fahrgestell der eingangs genannten Art, die technischen Merkmale des kennzeichnenden Teils des Anspruchs 1 vorgesehen.

Erfindungsgemäß ist somit ein Getriebe vorgesehen, das die Bewegung des Schiebebügels mit der Bewegung der Vorderachsverstrebung koppelt. Unter der Vorderachsverstrebung bzw. der Hinterachsverstrebung ist dabei jeweils neben der Querverbindung zwischen den Vorder- bzw. Hinterrädern die Längsverstrebung zu verstehen, die im Wesentlichen von den Seitenstreben des Schiebebügels zu den einzelnen Rädern führt. Beim erfindungsgemäßen Fahrgestell muss somit lediglich der Schiebebügel in Richtung auf die hinteren Räder zu bewegt werden, wodurch die Vorderachsverstrebung, also die vorderen Räder im Zusammenspiel mit ihrer Querstrebe und den Längsstreben, die jeweils zu den einzelnen Rädern führen, ebenfalls nach hinten, in Richtung der hinteren Räder bzw. der Hinterachse bewegt wird.

Dazu ist das entsprechende Getriebe, das die Vorderachsverstrebung und den Schiebebügel verbindet, zweckmäßigerweise auf beiden Seiten, also an der linken Längsstrebe des Schiebebügels bzw. der Vorderachsverstrebung ebenso wie an der rechten Längsstrebe vorgesehen, so dass die linke und rechte Seite gleichmäßig bewegt werden. Gegebenenfalls ist es aber auch denkbar, nur einseitig ein Getriebe vorzusehen. Durch die gegensinnige Verschwenkung der Vorderachsverstrebung und des Schiebebügels werden diese beiden Teile, die im aufgebauten Zustand des Fahrgestells maximal weit voneinander entfernt sind, aufeinander zu bewegt und so in eine kompaktere Stellung gebracht. Wenn der Abstand der Vorderräder bzw. die vordere Querachse so ausgebildet sind, dass sie enger beieinander stehen als die Hinterachse bzw. die Räder der Hinterachse, können die Vorderräder mit ihrer verbindenden Querachse wenigstens teilweise zwischen den Hinterrädern zum Liegen kommen, so dass das Fahrgestell im zusammengelegten Zustand nur wenig Platz benötigt. Zudem ist das Zusammenlegen mit Hilfe des koppelnden Getriebes einfach möglich.

Darüber hinaus kann es erfindungsgemäß vorgesehen sein, dass das Getriebe zwei ineinander greifende Zahnradelemente aufweist, von denen eines mit dem Schiebebügel und das andere mit der Vorderachsverstrebung verbunden ist. Die Zahnradelemente weisen also neben den eigentlichen Zahnrädern, die ineinander greifen, Befestigungselemente auf, mit denen die Befestigung an bzw. in den Rohren der seitlichen Bügelelemente des Schiebebügels bzw. der Längsstreben, die zu den Vorderrädern führen, realisiert ist. Beim Verschwenken des Schiebebügels gegenüber der Vorderachsverstrebung greifen diese Zahnradelemente ineinander und bewirken die gegensinnige Bewegung des Schiebebügels und der Vorderachsverstrebung derart, dass diese beiden Elemente in Richtung der Hinterachse verschwenkt werden. Der Schiebebügel wird dabei der Hinterachse von oben angenähert, die Vorderachse von unten, und es ergibt sich im Endergebnis eine kompakte zusammengelegte Form.

Wenigstens ein Zahnradelement kann zur Verbindung mit dem Schiebebügel oder der Vorderachsverstrebung ein im Wesentlichen rohrförmiges oder stabförmiges Befestigungselement zum Auf- oder Einschieben aufweisen. So kann beispielsweise ein rohrförmiges Befestigungselement über ein entsprechendes rundes oder ovalförmiges Rohr des Schiebebügels oder auch der Längsverstrebung zum Vorderrad aufgeschoben werden. Gegebenenfalls können derartige Befestigungselemente zusätzlich mit Schrauben oder Steckstiften oder dergleichen fixiert werden. Ein stabförmiges Befestigungselement, das gegebenenfalls hohl als Rohr ausgebildet sein kann, kann in ein entsprechendes Rohr des Schiebebügels bzw. der Längsverstrebung der Vorderachse eingeschoben werden, wozu gegebenenfalls eine passgenaue Ausbildung erforderlich ist. Eine derartige Halterung bietet sich insbesondere im Zusammenhang mit der Vorderachsverstrebung an, da diese sich vom Getriebe aus nach unten in Richtung zum Vorderrad erstreckt. Gegebenenfalls kann zum Zahnelement hin eine Verbreiterung vorgesehen sein, die einen Endpunkt für das Einschieben in das Rohr der Vorderachsverstrebung bildet. Auch hier ist eine zusätzliche Fixierung mit Hilfe von Schrauben oder Nieten oder dergleichen möglich.

Zweckmäßigerweise ist eine Vorrichtung zur Ver- und Entriegelung des Getriebes vorgesehen, insbesondere eine über ein am Schiebebügel vorgesehenes Betätigungsteil bedienbare Vorrichtung zur Ver- und Entriegelung des Getriebes. Durch die Getriebeverriegelung wird verhindert, dass das Fahrgestell beispielsweise während des Schiebens des Kinderwagens versehentlich zusammengelegt wird. Wenn die Verriegelung über den Schiebebügel lösbar ist, beispielsweise über eine bestimmte Bewegung des Schiebebügels oder ein extra hierfür vorgesehenes Betätigungsteil aus einem oder mehreren Elementen, bietet dies den Vorteil, dass ein Bediener, der das Fahrgestell zusammenlegen möchte, sich nicht bis zum Getriebe selbst hinunterbücken muss, sondern lediglich eine entsprechende Aktion am Schiebebügel vornehmen muss. Das Betätigungsteil am Schiebebügel kann dabei gleichzeitig bei gegebenenfalls anderer Bedienung weitere Funktionalitäten erfüllen.

Die Vorrichtung zur Ver- und Entriegelung des Getriebes weist ein Stiftelement auf, das zur Verriegelung des Getriebes zum Eingreifen in wenigstens eine Aussparung eines Gehäuses des Getriebes ausgebildet ist. Das Getriebe weist ein Gehäuse auf, das beispielsweise die ineinander greifenden Zahnradelemente umgibt, damit diese gegenüber Verschmutzung oder Stößen und weiteren mechanischen Einflüssen geschützt sind. Über eine Aussparung dieses Getriebegehäuses, in die ein Verriegelungselement wie ein Stift oder Zapfen eingreift, ist es möglich, die Relativbewegung zwischen Schiebebügel und Vorderachsverstrebung zu sperren, wenn der Stift oder Zapfen diese Elemente verschwenksicher miteinander verbindet. Eine Verriegelung kann beispielsweise durch ein Eingreifen des Stiftes in ein Zahnelement erreicht werden, das dementsprechend nicht mehr gegenüber einer hinsichtlich der Zahnradbewegung festen Position des Stifts beispielsweise am Schiebebügel bewegt werden kann. Wenn das Stiftelement beispielsweise horizontal am Ende eines Bügelelements des Schiebebügels angeordnet ist, so steht es zweckmäßigerweise sowohl nach links als auch nach rechts über die Breite des Schieberohrs hinaus, so dass es dementsprechend in Gehäuseaussparungen auf der linken und rechten Seite eingreifen kann, so dass die Verriegelung gegenüber mechanischen Belastungen wie Rütteln oder dergleichen stabil ist und eine Beschädigung des Gehäuses z.B. durch einseitig wirkende Hebelkräfte im Bereich der Aussparung bzw. Öffnung verhindert wird.

Das Stiftelement kann mit einer Federbolzenanordnung gekoppelt sein, die dazu ausgebildet ist, das Stiftelement bei Verriegelung in einer Verriegelungsposition zu halten und bei Entriegeln aus der Verriegelungsposition hinauszudrücken. So wird beispielsweise in einem unteren Abschnitt des Schiebebügels auf der linken und rechten Seite ein Federbolzen mit einer Druckfeder angeordnet, wobei der Stift zur Verriegelung des Getriebes an dem Bolzen befestigt bzw. mit diesem verbunden ist, so dass der Stift zunächst in der Verriegelungsposition gehalten wird. Soll das Getriebe entriegelt werden, so wird eine Kraft, gegebenenfalls über ein entsprechendes Betätigungsteil des Schiebebügels, auf die Feder ausgeübt, die über den Bolzen, an dem der Stift bzw. der Zapfen befestigt ist, ein Hinausdrücken des Stiftelements aus der Verriegelungsposition in den Öffnungen des Gehäuses bewirkt.

Die Verriegelungsposition des Stiftelements kann mittels einer Bewegung des Schiebebügels lösbar sein. Es kann also eine Bewegung beispielsweise in Form von Drücken oder Schwenken am bzw. des Schiebebügels ausgeübt werden, die dazu führt, dass die Druckfeder der Federbolzenanordnung so zusammengedrückt wird, dass der Verriegelungsstift aus seiner Verriegelungsposition hinausgedrückt wird und das Getriebe löst.

Des weiteren kann das Fahrgestell erfindungsgemäß einen Tragrahmen oder eine andere Halterungsvorrichtung für eine Wanne oder eine andere Vorrichtung zur Aufnahme des Kindes oder der Puppe aufweisen, die beim Zusammenlegen in einer im Wesentlichen horizontalen Endposition verbleibt. Ist also ein Tragrahmen oder eine Platte oder dergleichen vorgesehen, auf dem eine Wanne oder eine Tasche anzubringen ist, in die anschließend das Kind gelegt wird, so verbleibt diese zweckmäßigerweise beim Zusammenlegen in einer Ebene parallel zum Boden, also im Wesentlichen horizontal, bzw. bei einer abweichenden ursprünglichen Anordnung in einer Ebene, die im aufgebauten und zusammengelegten Zustand des Fahrgestells den gleichen oder zumindest einen sehr ähnlichen Winkel mit dem Boden bildet. Dies bietet den Vorteil, dass eine Wanne oder Tragetasche gegebenenfalls beim Zusammenlegen auf dem Fahrgestell verbleiben kann bzw. auf dem zusammengelegten Fahrgestell befestigt werden kann, ohne dass sich die Position relativ zum Boden ändert. Es besteht also nicht das Problem, dass eine Wanne beim Zusammenlegen oder Aufbau des Fahrgestells von diesem herunterfällt bzw. bewegliche Teile innerhalb einer Tragetasche aus dieser herausfallen, nur weil das Fahrgestell aufgebaut oder zusammengelegt wird. Zudem ermöglicht das Beibehalten einer horizontalen Position dieser Halterungsvorrichtung, mit einem Blick zu erkennen, wie das Fahrgestell zusammengelegt ist, so dass der Wiederaufbau einfach vonstatten gehen kann, ohne dass beispielsweise ein aufwändiges Umdrehen oder dergleichen erforderlich wird.

Der Schiebebügel weist einen Teleskopmechanismus mit verschiedenen Rastpositionen zur Längenveränderung auf. Der Teleskopmechanismus ist dabei vorteilhafterweise so ausgebildet, dass ein oberer Bügelabschnitt in einen unteren Abschnitt eingeschoben wird, der entsprechend als Rohr mit einer größeren Querschnittsfläche ausgebildet ist. Dabei wird der Teleskopmechanismus vorteilhafterweise als versteckter Teleskopmechanismus derart realisiert, dass am Schiebebügel nach außen hin keine Öffnungen wie Löcher usw. oder Aussparungen oder dergleichen für die einzelnen Rastpositionen sichtbar sind.

Der Teleskopmechanismus kann selbstverständlich auch bei einem Fahrgestell ohne den vorstehend geschilderten Zusammenlegmechanismus realisiert sein. Es ist also denkbar, dass ein Fahrgestell zwar den Teleskopmechanismus aufweist, aber nicht oder nicht in der geschilderten Art und Weise zusammenlegbar ist.

Der Zusammenlegmechanismus ist mit einer Vorrichtung zur Ver- und Entriegelung des Getriebes vorgesehen und wird mittels des Teleskopmechanismus bedient, insbesondere über ein Zusammenschieben oder Auseinanderziehen des Schiebebügels über eine bestimmte Rastposition hinaus. Beispielsweise kann der obere Teil des Schiebebügels mit der Querverstrebung, die zum Greifen dient, über eine letzte, einer kürzesten Einstellung entsprechende Rastposition hinaus in den unteren Abschnitt hineingeschoben werden, um so eine Druckfeder zusammenzudrücken, die wiederum bewirkt, dass ein Stiftelement, das bis dahin das Getriebe verriegelt hat, aus seiner Verriegelungsposition hinausgedrückt wird. Bei einem erneuten Auseinanderziehen des Schiebebügels wird die Feder in eine entspannte Position bzw. eine gedehnte Position gebracht, die dazu führt, dass ein Stift oder ein anderes Element zum Verriegeln des Getriebes in die Verriegelungsposition hineingezogen und in dieser festgehalten wird.

Der Teleskopmechanismus kann eine im Schiebebügel angeordnete Schiene mit Aussparungen für die Rastpositionen aufweisen. Diese Art des versteckten Teleskopmechanismus ist wiederum unabhängig vom Zusammenlegen des Fahrgestells mit Hilfe eines Getriebes und kann demgemäß auch in Fahrgestellen ohne ein solches Getriebe realisiert werden. Über die Bedienung eines Zugelements mit einer entsprechenden Drahtanordnung können die einzelnen Rastpositionen angenommen bzw. verändert werden. Nach außen sind dabei keinerlei Löcher oder dergleichen zu sehen, so dass sich ein geschlosseneres Design ergibt, bei dem zudem die schwer zu reinigenden Öffnungen bei bisherigen Verstellmechanismen zur Längsverstellung des Schiebebügels entfallen. Zweckmäßigerweise ist die Schiene mit den Aussparungen sowohl auf der linken als auch auf der rechten Seite der Längsstreben des Schiebebügels vorgesehen, um eine feste Arretierung auf beiden Seiten zu erreichen. Unter Umständen kann jedoch auch eine einseitige Anordnung ausreichen, wenn bereits ohne ein Einrasten eine ausreichende Verschiebesicherheit auf der anderen Seite gegeben ist.

Für die Einstellung der Rastpositionen kann wie bereits geschildert ein Zugelement mit einer Drahtführung vorgesehen sein, über die in die unterschiedlichen Aussparungen der inneren Schiene eingegriffen wird. Die Drahtführung befindet sich dabei innerhalb des Rohrs des Schiebebügels, so dass ein Schutz gegen Verschmutzungen und Beschädigungen gegeben ist. Die Rastpositionen der Schiene, entsprechend den einzelnen Aussparungen, die hierzu an einer Seite der Schiene beispielsweise als mehr oder weniger runde Öffnungen vorgesehen sein können, können dabei gleiche Abstände haben bzw. in unterschiedlichen Abständen entlang der Schiene angeordnet sein, beispielsweise derart, dass der Schiebebügel im Bereich häufiger gebrauchter Einstellungen mehrere Verstellpositionen aufweist, während im weitgehend zusammengeschobenen Zustand beispielsweise zum Abstellen eines Kinderwagens nur noch eine Rastposition vorgesehen ist.

Der Teleskopmechanismus kann über einen Drehgriff und/oder eine Sicherungseinrichtung bedienbar und/oder arretierbar sein. Dabei bietet sich eine Bedienung an, die mit beiden Händen vorzunehmen ist, beispielsweise ein Drehen zusammen mit einem Hochdrücken eines Sicherungshebels oder dergleichen, um eine versehentliche Betätigung des Teleskopmechanismus oder gar eines daran gekoppelten Zusammenlegmechanismus zu verhindern. Es ist also beispielsweise denkbar, dass der Bediener einen Sicherungshebel drücken muss, der sich im Bereich des Eingreifens eines oberen Rohrabschnitts in einen unteren Rohrabschnitt des Schiebebügels befindet, um eine Arretierung für die Verstellung des Schiebebügels zu lösen. Dafür kann ein entsprechender Hebel beispielsweise gegen den Schiebebügel zu drücken sein. Gleichzeitig ist beispielsweise ein oberer Abschnitt des Schiebebügels in Richtung des aufnehmenden Rohrs zu bewegen, gegebenenfalls unter Drehen eines Drehgriffs, um so die über das Zugelement bzw. einen Stift oder Bolzen erreichte und gehaltene bisherige Rastposition zu lösen oder eine neue Rastposition zu erreichen bzw. zu fixieren. So kann der Rastmechanismus beispielsweise mit einem separaten Arretiermechanismus, der die Bewegung der Rohre des Teleskops gegeneinander verhindert, kombiniert sein.

Des Weiteren betrifft die Erfindung ein Fahrgestell, bei dem eine mittels eines Exzenterelements bewirkte und über einen Hebel betätigbare symmetrische Vorderradarretierung vorgesehen ist. Dabei kann über einen äußeren Hebel am linken und/oder rechten Vorderrad über ein zweckmäßig geformtes Exzenterelement, das gegebenenfalls einteilig mit dem Hebel ausgebildet sein kann, eine Vorderradarretierung erzielt werden, die immer symmetrisch zum zweiten Rad durchgeführt wird. Hierzu wirkt das Exzenterelement gegebenenfalls in geeigneter Form auf die Vorderachse ein, also auf die Querverstrebung der Vorderachsverstrebung.

Erfindungsgemäß kann durch das Exzenterelement bei einer Betätigung des Hebels ein Verriegelungselement wenigstens teilweise zur Arretierung in eine Ausnehmung einer Radabdeckung bewegbar und zur Entriegelung aus der Ausnehmung herausbewegbar sein. Wenn beispielsweise das Exzenterelement einteilig mit dem Hebel ausgebildet ist, kann dieses mit einem weiteren Verriegelungselement derart zusammenwirken, dass das Exzenterelement in eine Führungsschiene oder Nut seitlich an dem Verriegelungselement eingreift, so dass das Verriegelungselement bei einer Hebelbewegung beispielsweise von einer unteren in eine seitliche Stellung das Verriegelungselement anhebt, so dass dieses nach oben aus einer nut- oder schlitzförmigen Ausnehmung der Radabdeckung herausbewegt wird. So lange ein passend ausgebildetes Teilstück des Verriegelungselements sich in der Ausnehmung befindet, ist es nicht möglich, das Rad zu verschwenken, die Arretierung ist somit aktiv. Wird der Hebel aus seiner nach unten weisenden Position wieder seitlich nach oben bewegt und somit das Verriegelungselement aus der Ausnehmung herausgeführt, so kann das Rad wieder frei verschwenkt werden. An dem Verriegelungselement kann oberseitig eine Druckfeder vorgesehen sein, die mit einem sich darüber befindlichen Element, über das die Verbindung zur Vorderachsverstrebung hergestellt wird bzw. der Vorderradhalterung, derart in Verbindung stehen kann, dass die Feder beim Anheben des Verriegelungselements gegen dieses Element zusammengedrückt wird.

Die Vorderradarretierung ist selbstverständlich auch unabhängig vom durch das Getriebe bewirkten Zusammenlegmechanismus sowie vom Teleskopmechanismus zur Längenveränderung des Schiebebügels an einem Fahrgestell realisierbar. Ein Fahrgestell mit der geschilderten Vorderradarretierung kann aber ebenso den vorstehend beschriebenen Zusammenlegmechanismus und/oder Teleskopmechanismus aufweisen.

Darüber hinaus betrifft die Erfindung einen Kinder- oder Puppenwagen, der mit einem Fahrgestell wie im Vorstehenden geschildert ausgebildet ist. Der Kinder- oder Puppenwagen umfasst somit ein erfindungsgemäßes Fahrgestell mit einem Schiebebügel und einer Vorderachs- sowie Hinterachsverstrebung sowie den zugehörigen Vorder- und Hinterrädern. Daneben ist des Weiteren eine Halterungsvorrichtung für eine Tragetasche oder Tragewanne zur Aufnahme des Kindes bzw. der Puppe vorgesehen. Die Tragetasche kann dabei abnehmbar gestaltet sein, wozu gegebenenfalls ein separater Tragebügel vorgesehen ist. Vorteilhafterweise ist zudem ein Verdeck vorgesehen, um das Kind gegenüber Sonne, Regen und Wind und dergleichen zu schützen. Die Tragetasche bzw. Wanne ist zweckmäßigerweise vom Fahrgestell lösbar, wenn dieses zusammengebaut werden soll, um gegebenenfalls ein besseres Verstauen zu erreichen. Hierfür kann die Tragetasche selbst ebenfalls zusammenlegbar sein.

Weitere Vorteile und Einzelheiten der Erfindung ergeben sich anhand der folgenden Ausführungsbeispiele sowie aus den Zeichnungen. Dabei zeigen:
- Fig. 1: ein erfindungsgemäßes Fahrgestell im aufgebauten Zustand,
- Fig. 2: das Fahrgestell der Fig. 1 im zusammengelegten Zustand,
- Fig. 3: eine Explosionsskizze zur Verdeutlichung des Getriebemechanismus des Fahrgestells der Figuren 1 und 2,
- Fig. 4: das Getriebe des Fahrgestells der Figuren 1 und 2 im verriegelten Zustand,
- Fig. 5: das Getriebe der Fig. 4 im entriegelten Zustand nach einer Verschwenkung,
- Fig. 6: ein Hebelelement für eine Radarretierung bei einem erfindungsgemäßen Fahrgestell,
- Fig. 7: einen erfindungsgemäßen Kinder- oder Puppenwagen,
- Fig. 8: das Funktionsprinzip der Radarretierung bei einem erfindungsgemäßen Kinder- oder Puppenwagen mit dem Hebelelement der Fig. 6, und
- Fig. 9A, 9B und 9C: den Teleskopmechanismus des Schiebebügels eines erfindungsgemäßen Kinder- oder Puppenwagens.

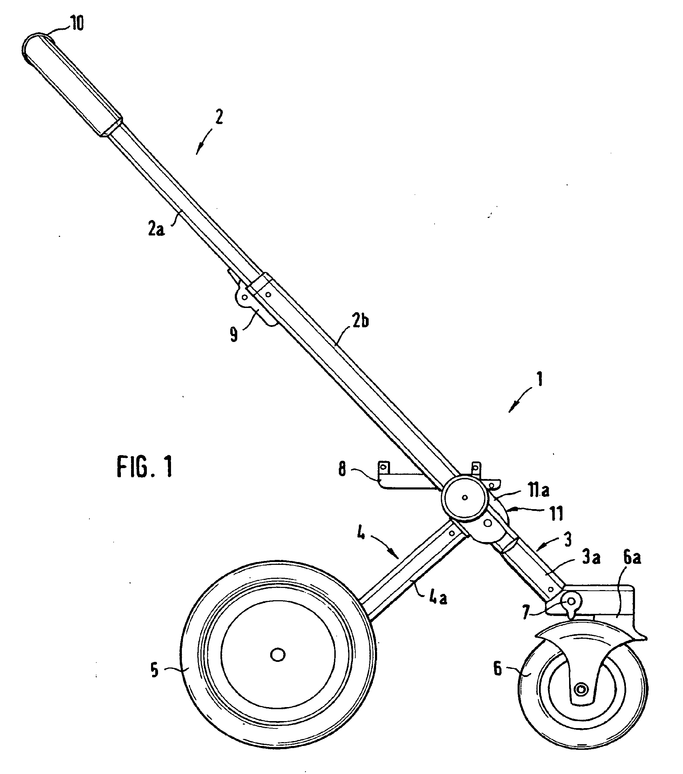

Die Fig. 1 zeigt ein erfindungsgemäßes Fahrgestell 1 im aufgebauten Zustand. Das Fahrgestell 1 weist einen Schiebebügel 2 und eine Vorderachsverstrebung 3, von der hier lediglich die Längsverstrebung 3a erkennbar ist, sowie eine Hinterachsverstrebung 4 mit der Längsverstrebung 4a auf. Darüber hinaus sind in der dargestellten Seitenansicht des Fahrgestells 1 jeweils ein Hinterrad 5 sowie ein Vorderrad 6 zu erkennen, die über hier nicht zu sehende Querverstrebungen der Hinterachsverstrebung 4 sowie der Vorderachsverstrebung 3 mit den entsprechenden Rädern auf der anderen Seite verbunden sind. Im Bereich der Vorderradhalterung 6a ist zudem ein Hebel 7 zu erkennen, über dessen Bewegung das Vorderrad arretierbar ist, wobei die Arretierung symmetrisch bezüglich der beiden Vorderräder 6 ausgebildet ist. In einer Position im Wesentlichen parallel zum Boden ist eine Halterungsvorrichtung 8 gezeigt, an der eine Wanne bzw. eine Tasche zur Aufnahme des Kindes bzw. der Puppe befestigbar sind.

Der Schiebebügel 2 ist mit einem Teleskopmechanismus derart ausgebildet, dass ein oberer Bügelabschnitt 2a in einen unteren Bügelabschnitt 2b eingeschoben werden kann, der wie der obere Bügelabschnitt 2a als Ovalrohr ausgebildet ist, jedoch mit einer größeren Querschnittsfläche. Zur Sicherung der Längenposition des Schiebebügels 2 ist ein Sicherungshebel 9 vorgesehen, der zum Lösen der Sicherung nach oben gedrückt werden kann. Die Einstellung von Rastpositionen bei der Längenänderung erfolgt mittels eines Zugelements mit Drahtführung, die innen liegend in den Rohren des Schiebebügels 2 angeordnet ist, und dort in eine Schiene eingreift. Zur Verstellung ist zudem neben dem Lösen des Sicherungshebels 9 ein Drehen am Drehgriff 10 des Schiebebügels 2 erforderlich, so dass durch das parallele Betätigen der beiden Elemente eine versehentliche Längenverstellung des Schiebebügels 2 praktisch ausgeschlossen wird.

Daneben weist das Fahrgestell 1 ein Getriebe 11 auf, von dem hier lediglich das Gehäuse 11a zu erkennen ist. Über das Getriebe 11 wird eine Kopplung zwischen dem Schiebebügel 2 und der Vorderachsverstrebung 3 derart hergestellt, dass bei einem Verschwenken des Schiebebügels 2 in Richtung der Hinterachsverstrebung 4 bzw. des Hinterrads 5 automatisch eine gegenläufige Verschwenkung der Vorderachsverstrebung 3 mit dem zugehörigen Vorderrad 6 und dem entsprechenden Rad der anderen Seite erfolgt, so dass die Vorderachsverstrebung 3 mit dem Vorderrad 6 ebenfalls in Richtung der Hinterachsverstrebung 4 bzw. in Richtung der Hinterräder 5 bewegt wird. Dies erfolgt über im Getriebegehäuse 11a vorgesehene Zahnradelemente, die jeweils mit dem Schiebebügel 2 bzw. mit der Längsverstrebung 3a der Vorderachsverstrebung 3 verbunden sind.

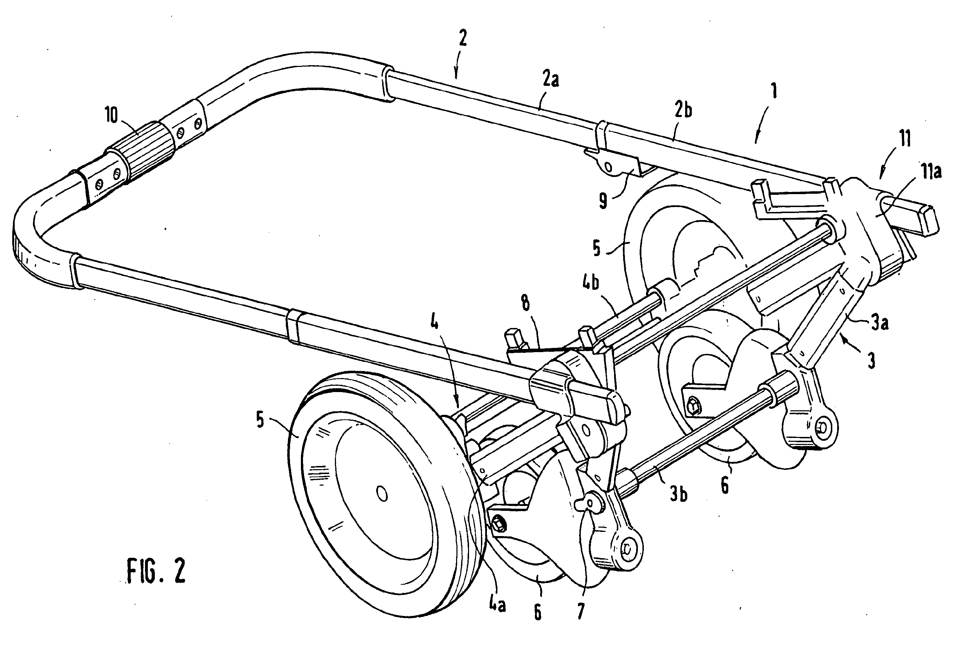

In der Fig. 2 ist das Fahrgestell 1 der Fig. 1 im zusammengelegten Zustand dargestellt. Das Getriebe 11 befindet sich hier in seiner entriegelten Position, in der ein Verschwenken der Vorderradarretierung 3 gegen den Schiebebügel 2 in Richtung der Hinterachsarretierung 4 möglich ist. Dabei nimmt der Schiebebügel 2 die in der Darstellung gezeigte im Wesentlichen bodenparallele Position an. Die Vorderachsverstrebung 3 mit der Längsverstrebung 3a und der Querverstrebung 3b sowie den beiden Vorderrädern 6 wird in Richtung der Hinterachsverstrebung 4 mit der Längsverstrebung 4a und der Querverstrebung 4b bewegt, derart, dass die Vorderräder 6 teilweise zwischen den beiden Hinterrädern 5, die weiter beabstandet sind, zum Liegen kommen. Damit ergibt sich eine kompakte zusammengelegte Form des Fahrgestells 1. Die Halterungsvorrichtung 8 wird dabei zwar leicht gegenüber dem Boden gekippt, behält aber ihre im Wesentlichen horizontale Position bei, so dass bei Bedarf eine Tragetasche oder dergleichen an der Haltevorrichtung 8 gehaltert werden kann.

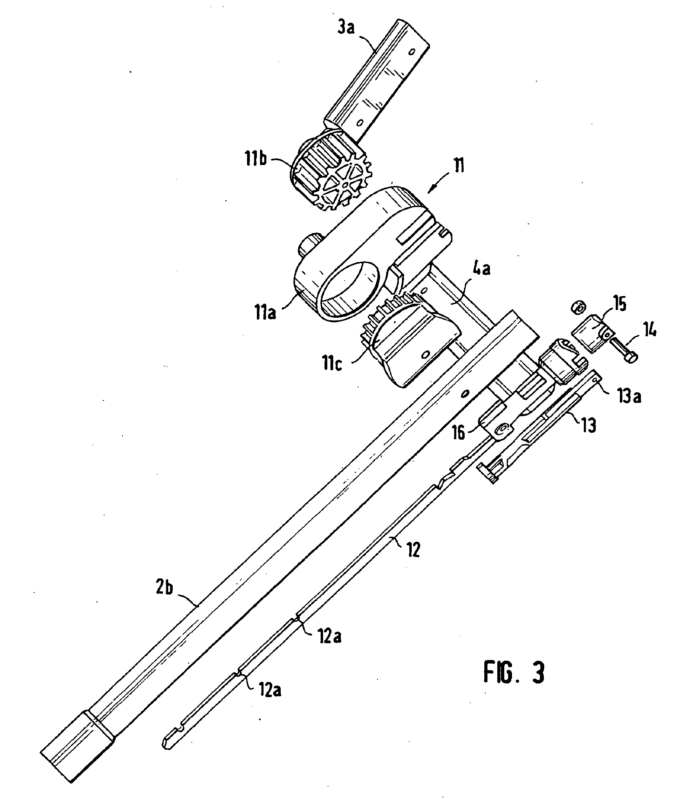

Die Fig. 3 zeigt eine Explosionsskizze zur Verdeutlichung des Getriebemechanismus des Fahrgestells 1 der Figuren 1 und 2. Zu sehen ist eine Längsverstrebung 3a der Vorderachsverstrebung 3, die als hohes Ovalrohr ausgebildet ist, in das ein Befestigungselement des Zahnradelements 11 b des Getriebes 11 eingreift. Das Zahnradelement 11 b wird im Getriebegehäuse 11 a mit einem gegenüberliegenden Zahnradelement 11c zusammengeführt, das ein Befestigungselement aufweist, das über ein Ovalrohr aufgeschoben werden kann, wobei hier ein Aufschieben über den unteren Bügelabschnitt 2b des Schiebebügels 2 vorgesehen ist. Die Zahnradelemente 11b und 11 c werden in das Gehäuse 11 eingepasst, wo sie ineinander greifen und eine gegenläufige Schwenkbewegung des unteren Bügelabschnitts 2b und damit des Schiebebügels 2 sowie der Längsverstrebung 3a der Vorderachsverstrebung bewirken.

Schließlich ist die Längsverstrebung 4a der Hinterachsverstrebung 4 zu sehen, die vom Getriebe 11 nach hinten in Richtung zum hier nicht dargestellten Hinterrad 5 verläuft. Hierzu ist die Längsverstrebung 4a der Hinterachsverstrebung 4 geeignet im Getriebebereich bzw. relativ zum unteren Bügelabschnitt 2b des Schiebebügels 2 gehaltert, gegebenenfalls über entsprechende Vorrichtungen am Getriebegehäuse 11a, die hier nicht näher dargestellt sind.

Im inneren Bereich des unteren Bügelabschnitts 2b des Schiebebügels 2, der als hohles Ovalrohr ausgebildet ist, ist eine Schiene 12 mit Aussparungen 12a angeordnet, die verschiedenen Rastpositionen entsprechen, die über einen Mechanismus mit einem Zugelement und einer Stift- oder Bolzenführung eingenommen werden können. In Richtung des Getriebes 11 ist ein Bolzen 13 vorgesehen, der mit einer hier nicht dargestellten Druckfeder eine Federbolzenanordnung ausbildet, über die ein Stiftelement 14 aus einer Verriegelungsposition des Getriebes 11 lösbar ist. Hierzu wird der Schiebebügel 2 über die Rastposition, die der kürzesten Einstellung des Schiebebügels 2 entspricht, hinaus zusammengedrückt, so dass die Feder des Bolzens 13 zusammengedrückt wird und über die Kopplung zum Stiftelement 14 dieses aus seiner Verriegelungsposition hinausgedrückt wird. Das Stiftelement 14 greift zur Kopplung mit dem Bolzen 13 in eine Öffnung 13a des Bolzens ein und ist zudem durch ein Halteelement 15 geführt, das bezüglich seiner Querschnittsfläche an den inneren Querschnitt des unteren Teils 2b des Schiebebügels angepasst ist und in diesen hingeschoben werden kann.

Wenn das Getriebe 11 verriegelt wird, und der Bolzen 13 das Stiftelement 14 aus der Verriegelungsposition nach unten hinausdrückt, wird das Halteelement 15 mit dem Stiftelement 14 nach unten bewegt und hält dieses dabei in seiner Position, wobei gleichzeitig die Abdichtung des unteren Teils 2b des Schiebebügels 2 gegenüber äußeren Einflüssen wie Verschmutzungen oder dergleichen weiterhin gewährleistet ist. Ein unteres Abschlusselement 16 wird ebenfalls in den unteren Bügelabschnitt 2b des Schiebebügels 2 eingeschoben.

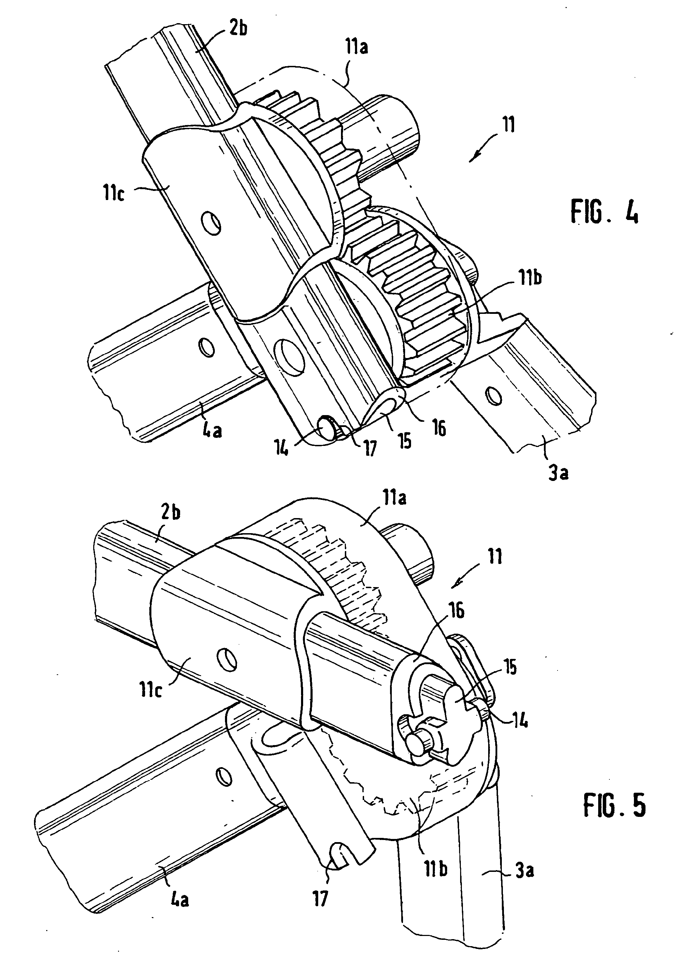

Die Fig. 4 zeigt das Getriebe 11 des Fahrgestells 1 der Figuren 1 und 2 im verriegelten Zustand. Dargestellt ist neben einem Teil des unteren Bügelabschnitts 2b des Schiebebügels 2 die Längsverstrebung 4a der Hinterachsverstrebung 4 sowie die Längsverstrebung 3a der Vorderachsverstrebung 3. In dem Gehäuse 11a des Getriebes 11 sind die beiden Zahnradelemente 11c sowie 11b aufgenommen, die mit ihren jeweiligen Befestigungselementen über den unteren Bügelabschnitt 2b des Schiebebügels übergeschoben bzw. in die Längsverstrebung 3a der Vorderachsverstrebung 3 eingeschoben und so befestigt sind. Die Befestigung der Zahnradelemente 11 c und 11 b an den entsprechenden Ovalrohren kann zudem mittels einer Verschraubung oder mittels Nieten, die durch entsprechende Öffnungen der Befestigungselemente der Zahnradelemente 11b, 11c sowie die Ovalrohre geführt werden, gesichert werden. Das Stiftelement 14, das durch das Halteelement 15 geführt ist, greift über das untere Abschlusselement 16 in hierzu vorgesehene Aussparungen 17 des Gehäuses 11a des Getriebes 11 ein, wodurch die Relativbewegung des Schiebebügels 2 gegenüber der Vorderachsverstrebung verhindert wird.

Die Fig. 5 zeigt das Getriebe 11 der Fig. 4 im entriegelten Zustand nach einer gegenseitigen Verschwenkung des Schiebebügels 2 sowie der Vorderachsverstrebung 3 gegenläufig zueinander. Entsprechend der Verschwenkung des Schiebebügels 2 sowie der Vorderachsverstrebung 3 ist in der Darstellung zu erkennen, dass sowohl der untere Bügelabschnitt 2b des Schiebebügels 2 als auch die Längsverstrebung 3a der Vorderachsverstrebung 3 auf die Längsverstrebung 4a zu und damit in Richtung der Hinterachsverstrebung 4 bewegt wurden. Das Stiftelement 14 wurde über eine entsprechende Betätigung der innen liegenden Federbolzenanordnung aus der Verriegelungsposition in der Aussparung 17 der beiden Seiten des Gehäuses 11a, die in der verriegelten Position am unteren Teil 2b des Schiebebügels 2 anliegen, hinausgedrückt. Damit wurde ein Verschwenken möglich, wie es hier gezeigt ist. Hierzu greifen die beiden Zahnradelemente 11c und 11 b ineinander und bewirken somit mit dem Herunterdrücken des Schiebebügels 2 in Richtung der Hinterachsverstrebung 4 gleichzeitig das nach hinten Falten bzw. Verschwenken der Vorderachsverstrebung.

Durch das Getriebe 11 ist es möglich, das Fahrgestell 1 auf einfache Art und Weise in einer platzsparenden Form zusammenzulegen.

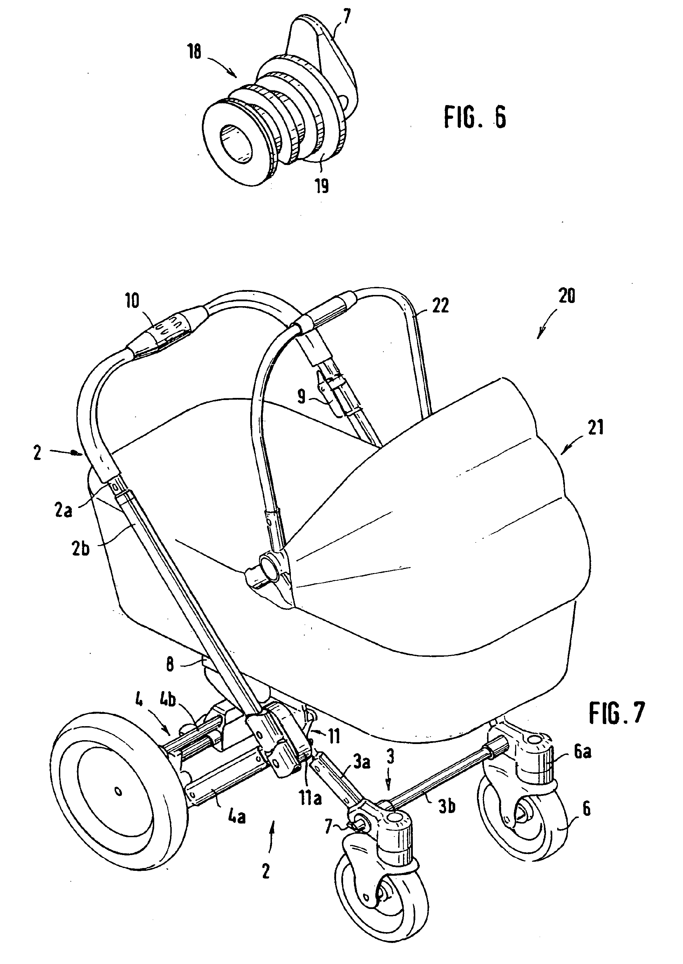

Die Fig. 6 zeigt ein Hebelelement 18 für eine erfindungsgemäße Vorderradarretierung mit einem außerhalb einer Radhalterung 6a angeordneten Hebel 7, wie er beispielsweise in der Fig. 1 zu sehen ist. Das Hebelelement 18 besteht dabei aus dem Hebel 7 sowie einem Exzenterelement 19, die ein einheitliches Bauteil ausbilden. Das Exzenterelement 19 wird mit einem Drehen des außen liegenden Hebels 7 bewegt, um so die Vorderräder 6 in einer symmetrischen Arretierposition zu arretieren. Hierzu ist das Exzenterelement 19 in geeigneter Art und Weise ausgebildet.

Die Fig. 7 zeigt schließlich einen erfindungsgemäßen Kinder- oder Puppenwagen 20 mit dem Fahrgestell 1, das über das Getriebe 11 durch ein gegenseitiges Verschwenken des Schiebebügels 2 gegen die Vorderachsverstrebung 3 platzsparend und leicht zusammenlegbar ist. An der Halterungsvorrichtung 8 des Fahrgestells 1 ist eine Tragetasche 21 befestigt, die über einen Tragebügel 22 nach Abnahme vom Fahrgestell 2 separat getragen werden kann. Der Schiebebügel 2 ist mit einem Teleskopmechanismus ausgebildet, so dass ein oberer Bügelabschnitt 2a des Schiebebügels 2 in einen unteren Bügelabschnitt 2b mit einer entsprechend größeren Querschnittsfläche eingeschoben werden kann. Über ein weiteres Einschieben ist die Verriegelung des Getriebes 11 lösbar, so dass dann ein Verschwenken des Schiebebügels 2 gegenüber der Vorderachsverstrebung 3 in der geschilderten Art und Weise möglich ist. Selbstverständlich kann die Tragetasche 21 ebenfalls zusammenlegbar sein, um so eine platzsparende Aufbewahrung des Kinder- oder Puppenswagens, wenn dieser nicht benötigt wird, zu gewährleisten, beispielsweise für den Transport in einem Pkw. Das Zusammenlegen des Fahrgestells 1 ist dabei ohne komplizierte Handgriffe über eine Betätigung des Drehgriffs 10 sowie des Sicherungshebels 9 für den Teleskopmechanismus des Schiebebügels 2 zu erreichen.

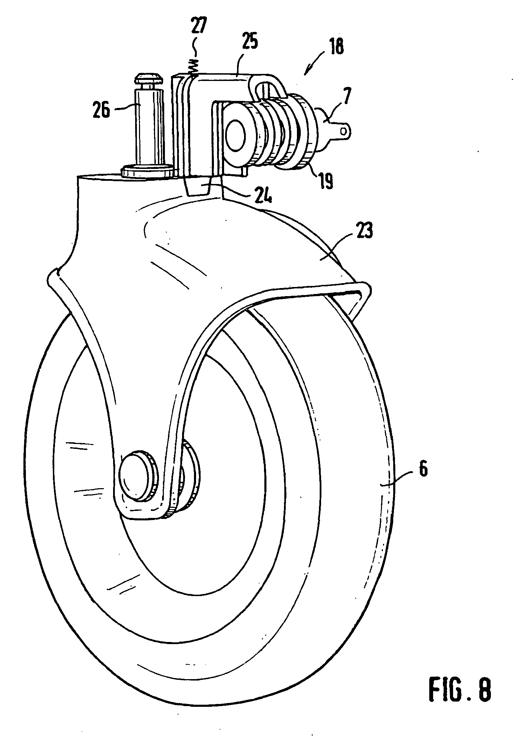

In der Fig. 8 ist das Funktionsprinzip der Radarretierung bei einem erfindungsgemäßen Kinder- oder Puppenwagen mit dem Hebelelement 18 der Fig. 6 gezeigt. Das Hebelelement 18 besteht aus dem Hebel 7, der einteilig mit dem Exzenterelement 19 ausgebildet ist. Das Hebelelement 18 greift seitlich in ein Verriegelungselement 25 ein, das auf seiner Oberseite eine Druckfeder 27 aufweist, die im hier gezeigten entriegelten Zustand der Radarretierung gegen ein hier nicht dargestelltes oberseitig angeordnetes Element zur Verbindung mit der Vorderachsverstrebung, die Vorderradhalterung 6a der Fig. 7, anstößt und dadurch zusammengedrückt wird.

Des Weiteren ist ein Stiftelement 26 dargestellt, an dem das umgebende Element zur Verbindung mit der Vorderachsverstrebung gehaltert wird, das eine Öffnung zur Aufnahme des Stiftelements 26 aufweist.

Das Verriegelungselement 25 befindet sich in der dargestellten entriegelten Position oberhalb einer Ausnehmung 24, die im oberen Abschnitt einer Radabdeckung 23 vorgesehen ist. Die Ausnehmung 24 ist hierbei nutförmig ausgebildet. Befindet sich das Verriegelungselement 25, wie hier dargestellt, nicht in der Ausnehmung 24, so kann das Rad verschwenkt werden. Wird hingegen der Hebel 7 wieder nach unten bewegt, so bewegt sich das Verriegelungselement 25 ebenfalls nach unten und greift in die Ausnehmung 24 ein. Damit wird das Vorderrad 6 gegen ein Verschwenken in seiner Arretierposition fixiert.

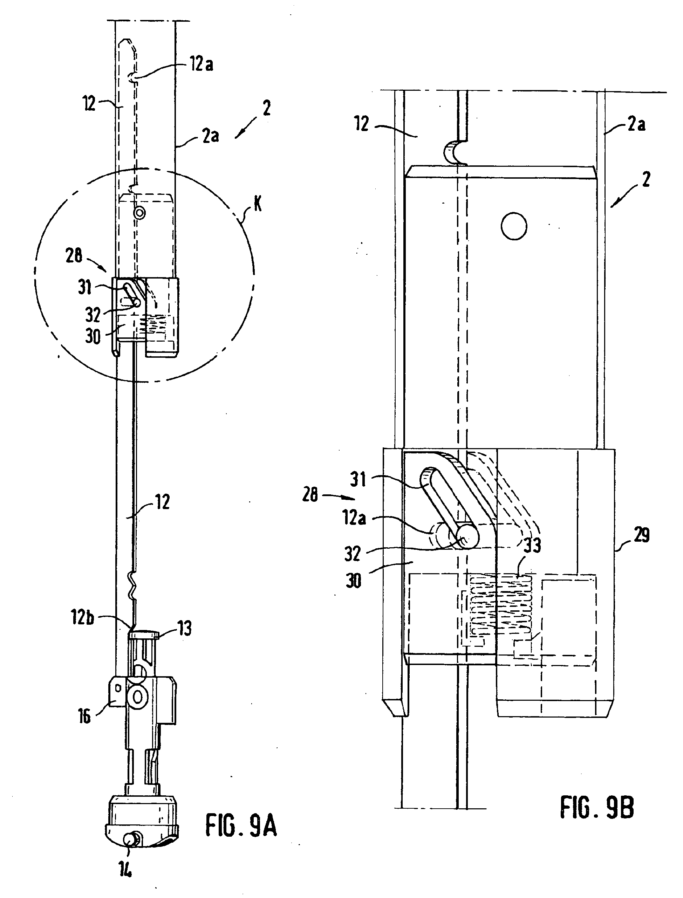

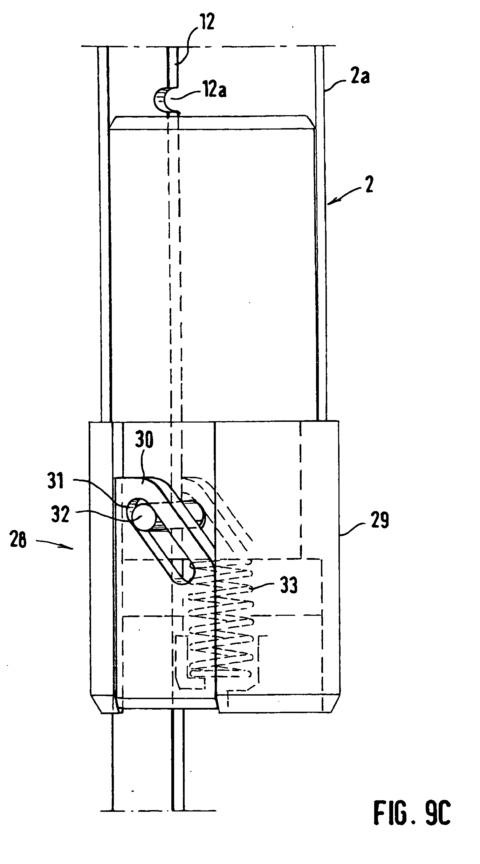

In den Figuren 9A bis 9C ist der Teleskopmechanismus des Schiebebügels 2 eines erfindungsgemäßen Kinder- oder Puppenwagens dargestellt. Die Fig. 9B zeigt dabei vergrößert den sich innerhalb des Kreises K befindenden Bereich der Fig. 9A. In dieser Darstellung wird der Teleskopmechanismus nicht in einer Rastposition gehalten. In der Fig. 9C hingegen ist das Einrasten in einer Rastposition gezeigt.

Beim erfindungsgemäßen Teleskopmechanismus wird ein oberer Bügelabschnitt 2a in einen hier nicht dargestellten unteren Bügelabschnitt 2b des Schiebebügels eingeschoben. Dies erfolgt unter Verwendung eines Bowdenzugs durch das Zusammenwirken eines Zugelements mit einer Stiftelementführung. Die Schiene 12, die innerhalb des Schiebebügels 2 geführt ist, weist verschiedene Aussparungen 12a in bestimmten Abständen auf, die den Rastpositionen des Teleskopmechanismus entsprechen. Des Weiteren wirkt die Schiene mit dem Mechanismus zur Verriegelung eines hier nicht dargestellten Getriebes zusammen, wozu das Abschlusselement 16 mit dem Stiftelement 14 vorgesehen ist, wobei das Stiftelement 14 mit Hilfe des Bolzens 13, der hinter eine weitere Aussparung 12b der Schiene 12 greift, aus seiner Verriegelungsposition bewegt wird. Dies geschieht durch das Ausüben einer Druckkraft auf den Schiebebügel 2, die dann zu einem Ausrasten der Gestellverriegelung führt, wodurch das Zusammenlegen des Fahrgestells möglich wird.

Der Teleskopmechanismus wird mittels einer Verriegelungsanordnung 28 realisiert, die im Wesentlichen ein Verriegelungselement 30 (= Zugelement) aufweist, das innerhalb eines Hüllenelements 29, das dieses teilweise umgibt, beweglich gelagert ist.

Das Verriegelungselement 30 weist hierbei ein Langloch 31 auf, in dem ein Stiftelement 32 geführt wird. In der in der Fig. 9C gezeigten verriegelten Stellung befindet sich das Stiftelement 32 am oberen Ende des Langlochs 31 des Verriegelungselements 30, das bezüglich des Hüllenelements 29 so verschoben ist, dass es an seiner Unterkante mit diesem abschließt. Eine Druckfeder 33 ist in diesem Falle entspannt. Das Stiftelement 32 greift in eine Aussparung 12a der Schiene ein, so dass der Schiebebügel 2 in einer Rastposition festgestellt ist.

Zur Entriegelung wird, wie in der Fig. 9B gezeigt, das Verriegelungselement 30 über einen Bowdenzug nach oben gezogen, so dass das Stiftelement 32 sich nun in dem Langloch 31 in der untersten Position befindet. Die Druckfeder 33 ist jetzt zusammengedrückt. Das Stiftelement 32 befindet sich neben der Schiene, so dass nun ein Verstellen des Schiebebügels 2 möglich ist, um die Länge des Schiebebügels 2 wie gewünscht anzupassen. Ist die gewünschte Verstellung erreicht, wird der Schiebebügel 2 erneut in einer Rastposition fixiert, die gegebenenfalls durch eine andere Aussparung 12a als in der Fig. 9C vorgegeben ist.

So ist mit Hilfe des erfindungsgemäßen Teleskopmechanismus eine einfache Verstellung eines Schiebebügels eines Kinderwagens möglich, ohne dass der Mechanismus mit seinen Rastpositionen von außen zu erkennen ist. Bei einer Kombination mit einem Getriebe zum Zusammenlegen des Fahrgestells kann die Schiene für den Teleskopmechanismus zudem eine weitere Funktion beim Zusammenlegen erfüllen, wie vorstehend beschrieben.

## Patentansprüche

1. Fahrgestell für einen Kinder- oder Puppenwagen mit einem Schiebebügel und einer Vorderachs- sowie einer Hinterachsverstrebung, wobei der Schiebebügel (2) mit der Vorderachsverstrebung (3) zum Zusammenlegen des Fahrgestells (1) über ein Getriebe (11) derart verschwenkbar gekoppelt ist, dass bei einem Verschwenken des Schiebebügels (2) in Richtung der Hinterachsverstrebung (4) eine gegenläufige Verschwenkung der Vorderachsverstrebung (3) derart erfolgt, dass die Vorderachsverstrebung (3) entgegengesetzt zum Schiebebügel (2) ebenfalls auf die Hinterachsverstrebung (4) zu bewegt wird, wobei eine Vorrichtung zur Ver- und Entriegelung des Getriebes (11) vorgesehen ist, **dadurch gekennzeichnet, dass** die Vorrichtung zur Ver- und Entriegelung des Getriebes (11) ein Stiftelement (14) aufweist, das zur Verriegelung des Getriebes zum Eingreifen in wenigstens eine Aussparung (17) eines Gehäuses des Getriebes ausgebildet ist, wobei der Schiebebügel (2) einen Teleskopmechanismus mit verschiedenen Rastpositionen zur Längenveränderung aufweist und die Vorrichtung zur Ver- und Entriegelung des Getriebes mittels des Teleskopmechanismus bedienbar ist.

2. Fahrgestell nach Anspruch 1, **dadurch gekennzeichnet, dass** das Getriebe zwei ineinander greifende Zahnradelemente (11 b, 11 c) aufweist, von denen eines mit dem Schiebebügel (2) und das andere mit der Vorderachsverstrebung (3) verbunden ist.

3. Fahrgestell nach Anspruch 2, **dadurch gekennzeichnet, dass** wenigstens ein Zahnradelement (11 b, 11 c) zur Verbindung mit dem Schiebebügel (2) oder der Vorderachsverstrebung (3) ein im Wesentlichen rohrförmiges oder stabförmiges Befestigungselement zum Auf- oder Einschieben aufweist.

4. Fahrgestell nach einem der vorangehenden Ansprüche, **dadurch gekennzeichnet, dass** die Vorrichtung zur Ver- und Entriegelung des Getriebes über ein am Schiebebügel vorgesehenes Betätigungsteil bedienbar ist.

5. Fahrgestell nach einem der vorangehenden Ansprüche, **dadurch gekennzeichnet, dass** das Stiftelement (14) mit einer Federbolzenanordnung gekoppelt ist, die dazu ausgebildet ist, das Stiftelement (14) bei Verriegelung in einer Verriegelungsposition zu halten und beim Entriegeln aus der Verriegelungsposition hinauszudrücken.

6. Fahrgestell nach einem der vorangehenden Ansprüche, **dadurch gekennzeichnet, dass** die Verriegelungsposition des Stiftelements (14) mittels einer Bewegung des Schiebebügels (2) lösbar ist.

7. Fahrgestell nach einem der vorangehenden Ansprüche, **dadurch gekennzeichnet, dass** das Fahrgestell (1) einen Tragrahmen oder eine andere Halterungsvorrichtung (8) für eine Wanne oder für eine andere Vorrichtung zur Aufnahme des Kindes oder der Puppe aufweist, welcher Tragrahmen oder welche Halterungsvorrichtung beim Zusammenlegen in einer im Wesentlichen horizontalen Position verbleibt.

8. Fahrgestell nach einem der vorangehenden Ansprüche **dadurch gekennzeichnet, dass** die Vorrichtung zur Ver- und Entriegelung durch ein Zusammenschieben oder Auseinanderziehen des Schiebebügels (2) über eine bestimmte Rastposition hinaus bedienbar ist.

9. Fahrgestell nach einem der vorangehenden Ansprüche, **dadurch gekennzeichnet, dass** der Teleskopmechanismus eine im Schiebebügel (2) angeordnete Schiene (12) mit Aussparungen (12a) für die Rastpositionen aufweist.

10. Fahrgestell nach einem der vorangehenden Ansprüche, **dadurch gekennzeichnet, dass** für die Einstellung der Rastpositionen eines Zugelements mit einer Stift-oder Bolzenführung vorgesehen ist.

11. Fahrgestell nach einem der vorangehenden Ansprüche, **dadurch gekennzeichnet, dass** der Teleskopmechanismus über einen Drehgriff (10) und/oder eine Sicherungseinrichtung bedienbar und/oder arretierbar ist.

12. Fahrgestell, insbesondere nach einem der vorangehenden Ansprüche, **dadurch gekennzeichnet, dass** eine mittels eines auf die Vorderachse einwirkenden Exzenterelements (19) bewirkte und über einen Hebel (7) betätigbare symmetrische Vorderradarretierung vorgesehen ist.

13. Fahrgestell nach Anspruch 12, **dadurch gekennzeichnet, dass** durch das Exzenterelement (19) bei einer Betätigung des Hebels (7) ein Verriegelungselement (25) wenigstens teilweise zur Arretierung in eine Ausnehmung (24) einer Radabdeckung (23) bewegbar und zur Entriegelung aus der Ausnehmung (24) herausbewegbar ist.

14. Kinder- oder Puppenwagen (20), ausgebildet mit einem Fahrgestell (1) nach einem der vorangehenden Ansprüche.

## Claims

1. A chassis for a pushchair or doll's pram with a push-bar, a front-axle brace and a rear-axle brace, wherein the push-bar (2) is coupled to the front-axle brace (3) in a pivoting manner via a gear mechanism (11) in order to fold down the chassis (1) in such a manner that when the push-bar (2) is pivoted in the direction towards the rear-axle brace (4), a contrary pivoting of the front-axle brace (3) takes place, so that the front-axle brace (3) is also displaced opposite to the push-bar (2) towards the rear-axle brace (4), wherein a device is provided for the locking and unlocking of the gear mechanism (11),
**characterised in that**
the device for the locking and unlocking of the gear mechanism (11) provides a pin element (14) which, for the locking of the gear mechanism, is embodied to engage in at least one recess (17) of a housing of the gear mechanism, wherein the push-bar (2) provides a telescopic mechanism with various locking positions for the length adjustment, and the device for the locking and unlocking of the gear mechanism can be operated by means of the telescopic mechanism.

2. The chassis according to claim 1,
**characterised in that**
the gear mechanism provides two gear-wheel elements (11b, 11c) engaging with one another, of which one is connected to the push-bar (2) and the other is connected to the front-axle brace (3).

3. The chassis according to claim 2,
**characterised in that**,
for the connection with the push-bar (2) or the front-axle brace (3), at least one gear-wheel element (11b, 11c) provides a substantially tubular or rod-shaped fastening element for plugging on or plugging in.

4. The chassis according to any one of the preceding claims,
**characterised in that**
the device for the locking and unlocking of the gear mechanism can be operated via an operating element provided on the push-bar.

5. The chassis according to any one of the preceding claims,
**characterised in that**
the pin element (14) is coupled with a spring-bolt arrangement, which is embodied to hold the pin element (14) in a locking position when locked and to press it out of the locking position when unlocked.

6. The chassis according to any one of the preceding claims,
**characterised in that**
the locking position of the pin element (14) can be released by means of a movement of the push-bar (2).

7. The chassis according to any one of the preceding claims,
**characterised in that**
the chassis (1) provides a carrying frame or another holding device (8) for a tray or for another device for receiving the child or the doll, which carrying frame or which holding device remains in a substantially horizontal position when folding down.

8. The chassis according to any one of the preceding claims,
**characterised in that**
the device for the locking and unlocking can be operated by a pushing together or pulling apart of the push-bar (2) beyond a given locking position.

9. The chassis according to any one of the preceding claims,
**characterised in that**
the telescopic mechanism provides a rail (12) arranged within the push bar (2) with recesses (12a) for the locking positions.

10. The chassis according to any one of the preceding claims,
**characterised in that**,
for the adjustment of the locking positions a pulling element with a pin guide or bolt guide is provided.

11. The chassis according to any one of the preceding claims,
**characterised in that**
the telescopic mechanism can be operated and/or locked via a twist-grip (10) and/or a safety-locking device.

12. The chassis, especially according to any one of the preceding claims,
**characterised in that**
a symmetrical front-wheel lock activated by means of a cam element (19) acting on the front axle and operated via a lever (7) is provided.

13. The chassis according to claim 12,
**characterised in that**,
in the case of an activation of the lever (7), a locking element (25) can be displaced by the cam element (19) at least partially into a recess (24) of a wheel guard (23) for the locking and can be displaced from the recess (24) for the unlocking.

14. A pushchair or doll's pram (20) embodied with a chassis (1) according to any one of the preceding claims.

## Revendications

1. Châssis pour une voiture d'enfant ou un landau de poupée comprenant un arceau de poussée et une entretoise d'essieu avant et d'essieu arrière, étant entendu que l'arceau de poussée (2) est couplé de façon basculante avec l'entretoise de l'essieu avant (3) par le biais d'un engrenage (11) aux fins du repliage du châssis (1) de telle sorte que lors d'un basculement de l'arceau de poussée (2) dans la direction de l'entretoise de l'essieu arrière (4), il se produit un basculement dans le sens inverse de l'entretoise de l'essieu avant (3) de telle sorte que l'entretoise de l'essieu avant (3) est également déplacée à l'opposé de l'arceau de poussée (2) sur l'entretoise de l'essieu arrière (4), étant entendu qu'il est prévu un dispositif pour le verrouillage et le déverrouillage de l'engrenage (11), **caractérisé en ce que** le dispositif de verrouillage et de déverrouillage de l'engrenage (11) présente un élément de tige (14) qui est conçu pour s'engager dans au moins un évidement (17) d'un logement de l'engrenage afin de verrouiller l'engrenage, étant entendu que l'arceau de poussée (2) présente un mécanisme télescopique comprenant différentes positions d'enclenchement aux fins de la modification de sa longueur et que le dispositif de verrouillage et de déverrouillage de l'engrenage peut être actionné au moyen du mécanisme télescopique.

2. Châssis selon la revendication 1, **caractérisé en ce que** l'engrenage présente deux éléments de roue dentée (11 b, 11c) s'engageant l'un dans l'autre, dont un est relié avec l'arceau de poussée (2) et l'autre avec l'entretoise de l'essieu avant (3).

3. Châssis selon la revendication 2, **caractérisé en ce qu'**au moins un élément de roue dentée (11 b, 11c) présente un élément de fixation essentiellement en forme de tube ou de barre destiné à la traction ou à l'insertion aux fins de la jonction avec l'arceau de poussée (2) ou l'entretoise de l'essieu avant (3).

4. Châssis selon l'une des revendications précédentes, **caractérisé en ce que** le dispositif de verrouillage et de déverrouillage de l'engrenage peut être actionné par le biais d'une pièce d'actionnement prévue sur l'arceau de poussée.

5. Châssis selon l'une des revendications précédentes, **caractérisé en ce que** l'élément de tige (14) est couplé avec un agencement de boulon de suspension qui est conçu pour maintenir l'élément de tige (14) dans une position de verrouillage lors du verrouillage et pour le chasser de la position de verrouillage lors du déverrouillage.

6. Châssis selon l'une des revendications précédentes, **caractérisé en ce que** la position de verrouillage de l'élément de tige (14) peut être enlevée au moyen d'un mouvement de l'arceau de poussée (2).

7. Châssis selon l'une des revendications précédentes, **caractérisé en ce que** le châssis (1) présente un cadre porteur ou un autre dispositif de support (8) pour une cuve ou pour un autre dispositif destiné à recevoir l'enfant ou la poupée, lequel cadre porteur ou dispositif de support reste dans une position essentiellement horizontale lors du repliage.

8. Châssis selon l'une des revendications précédentes, **caractérisé en ce que** le dispositif de verrouillage et de déverrouillage peut être actionné en rétractant ou en déployant l'arceau de poussée (2) au-delà d'une position d'enclenchement déterminée.

9. Châssis selon l'une des revendications précédentes, **caractérisé en ce que** le mécanisme télescopique présente un rail (12) agencé dans l'arceau de poussée (2) pourvu d'évidements (12a) pour les positions d'enclenchement

10. Châssis selon l'une des revendications précédentes, **caractérisé en ce qu'**il est prévu un élément de traction avec un guidage par tige ou par boulon pour le réglage des positions d'enclenchement.

11. Châssis selon l'une des revendications précédentes, **caractérisé en ce que** le mécanisme télescopique peut être actionné et/ou bloqué par le biais d'une poignée tournante (10) et/ou d'un dispositif de sécurité.

12. Châssis, en particulier selon l'une des revendications précédentes, **caractérisé en ce qu'**il est prévu un blocage symétrique des roues avant fonctionnant au moyen d'un élément d'excentrique (19) agissant sur l'essieu avant et pouvant être actionné par le biais d'un levier (7).

13. Châssis selon la revendication 12, **caractérisé en ce que** sous l'effet de l'élément d'excentrique (19), lors d'un actionnement du levier (7), un élément de verrouillage (25) peut être amené au moins partiellement dans un évidement (24) d'une protection de roue (23) aux fins du blocage et sorti de l'évidement (24) aux fins du déverrouillage.

14. Voiture d'enfant ou landau de poupée (20) réalisé avec un châssis (1) selon l'une des revendications précédentes.
